(19) Europäisches Patentamt
European Patent Office
Office européen des brevets

(11) **EP 3 872 897 A1**

(12) **EUROPEAN PATENT APPLICATION**

(43) Date of publication:
**01.09.2021 Bulletin 2021/35**

(51) Int Cl.:
*H01M 4/13* $^{(2010.01)}$    *B82Y 30/00* $^{(2011.01)}$
*H01G 11/46* $^{(2013.01)}$    *H01G 11/86* $^{(2013.01)}$
*H01M 4/36* $^{(2006.01)}$    *H01M 4/38* $^{(2006.01)}$
*H01M 4/48* $^{(2010.01)}$

(21) Application number: **20305185.9**

(22) Date of filing: **26.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Centre National de la Recherche Scientifique 75016 Paris (FR)**
• **Institut National De La Recherche Scientifique Québec, Québec G1K 9A9 (CA)**

(72) Inventors:
• **PECH, David Sarinn**
  **31031 TOULOUSE cedex 4 (FR)**
• **PATNAIK, Sai-Gourang**
  **31031 TOULOUSE cedex 4 (FR)**
• **GUAY, Daniel**
  **QUEBEC, Québec G1K 9A9 (CA)**

(74) Representative: **Ipsilon**
**Le Centralis**
**63, avenue du Général Leclerc**
**92340 Bourg-la-Reine (FR)**

(54) **A NOVEL GOLD-BASED POROUS MATERIAL FOR A LITHIUM BATTERY**

(57) The present invention relates to a novel gold-based porous material, the use of said gold-based porous material as a precursor of a negative active material, the preparation process of said gold-based porous material, a novel gold-based porous material comprising lithium, the use of said gold-based porous material comprising lithium as a negative electrode material, a lithium-ion battery comprising said gold-based porous material comprising lithium, and a process for the preparation of said gold-based porous material comprising lithium.

a)                      b)

**FIG.1**

**Description**

The present invention relates to a novel gold-based porous material, the use of said gold-based porous material as a precursor of a negative active material, the preparation process of said gold-based porous material, a novel gold-based porous material comprising lithium, the use of said gold-based porous material comprising lithium as a negative electrode material, a lithium-ion battery comprising said gold-based porous material comprising lithium, and a process for the preparation of said gold-based porous material comprising lithium.

The invention deals more particularly, but not exclusively, with lithium batteries and microbatteries having improved cycling stability.

With the emergence of connected objects able to collect data, interact with the environment and communicate wirelessly over the internet for a plethora of applications such as healthcare, self-driving vehicles, environmental monitoring and smart manufacturing, thin-film lithium microbatteries have been extensively researched. Thin-film lithium microbatteries are generally formed by two electrodes (positive and negative) separated by an electrolyte. Such a microbattery further comprises metallic current collectors. All the layers of the microbattery are in the form of thin films, for example obtained by PVD (Physical Vapor Deposition) or CVD (Chemical Vapor Deposition). The total thickness of the stack with the packaging layers can be less than 100 $\mu$m.

In a microbattery, the negative electrode is generally a metallic lithium negative electrode so as to obtain a lithium-metal microbattery, or it comprises a carbon-based material such as graphite, or an insertion material such as LiNiO$_2$, SnO, indium, or lead oxide, or a crystal growth material (Si, Ge, C, etc) so as to obtain a lithium-ion (or Li-ion) microbattery. The lithium-metal microbatteries usually present the best electrochemical properties in particular in terms of potential and stability of the charging and discharging capacity, but are difficult to fabricate. Moreover, lithium metal is very flammable, air- and water-sensitive, and minute lithium dendrites can form on the anodes when such lithium batteries are rapidly charged, inducing short circuits, causing the battery to rapidly overheat and catch fire. By contrast, lithium-ion microbatteries enable the usual microfabrication techniques to be used, but generally presents lower electrochemical performances on cycling. For example, graphite has been widely used as an anode material for commercial Li-ion batteries, due to the advantages of low cost, low and flat working voltage, and excellent reversibility. However, it cannot satisfy the requirements of higher storage capacity/energy density for thin-film Li-ion batteries due to its insufficient theoretical capacity of 372 mAh/g. Concerning insertion materials, lithium is able to form well-defined intermetallic phases (Li$_x$M) with numerous metals M (M=Sn, Mg, Al, Sb, Ge, Si, etc.) at room temperature, which offer much higher lithium-storage capacities than lithiated graphite (LiC$_6$). However, alloying of such large amounts of lithium with these metals to form intermetallic phases is associated with huge volume changes (+400%). The large volume changes accompanying lithium insertion and extraction often gives rise to fragmentation of the material and the exposure of a large surface area in contact with the electrolyte, and the formation of the passivating layer on the negative electrode requires from 25% to 40% of the initial capacity, resulting in poor cycling stability.

Sn-based alloys and their oxides have attracted considerable interest because of their high theoretical specific capacities. However, Sn anodes also suffer from a variety of issues like volume expansion (up to 360%), related continuous solid electrolyte interface(SEI) formation, and consequent capacity fading. Such issues are magnified in context of microbatteries, where there are not many amenities for structural engineering due to limited space. Nevertheless, there have been several efforts to utilize them in microbatteries, through alloying with other metal, constructing porous 3D architectures, makinghomogenous/ordered carbon composites, etc. However, most of them still fail to achieve long cyclability and high rate capability.

From US 2013/295461 A1 is known the preparation and the use of a nano-porous gold/SnO$_2$ nanocomposite in a lithium-ion battery. The nano-porous gold/SnO$_2$ nanocomposite is obtained by chemically dealloying a silver-gold alloy so as to form a porous gold structure of bicontinuous channels, precipitating (plating) nanocrystalline tin on the surfaces of the interior walls of the channels of the porous gold structure, and oxidizing the tin so as to form a 100 nm-thick 3D nanoporous gold/ceramic composite. However, cyclability and rate capability are not optimized. For example, the cycling stability for battery performance is meagre (<150 cycles). Additionally, such a structure obtained using top down approach utilizes strong acid (hence difficult for wafer level integration), is time consuming, and lacks flexibility for extension to other porous metal systems.

Thus, the aim of the present invention is to overcome the drawbacks of the cited prior art, and more particularly, to provide a negative electrode material which can lead to a (micro)battery having an improved areal capacity and/or longer life cycle, and which can be confined in an embedded microsystem with limited space available.

The gold-based porous material

A first object of the present invention is a gold-based porous material, preferably in the form of a film, wherein said gold-based porous material comprises a gold porous substrate and a coating comprising a tin gold alloy.

The gold-based porous material leads to a battery having rate capability with flat discharge profile even at high rates, and robust cycling stability. Furthermore, the gold-based porous material can be used as a precursor of an electrode material in miniaturized devices, where size and compactness are critical, and cost is mainly determined by the microfabrication process and not by the minute amount of active material involved.

Indeed, the applicant discovered that this gold-based material when used in a lithium battery can insert lithium and act as an anode active material. It can lead to excellent electrochemical performances, in terms of initial specific capacity, and cycling stability. This result is surprising, bearing in mind that tin is known to trigger considerable volume expansion, leading to a deterioration of the electrochemical performances. Against all expectation, however, it was found that the gold-based porous material of the invention has a limited volume expansion, and leads to a substantial improvement in electrochemical performances of the battery.

The coating comprising a tin gold alloy preferably covers at least partly, and more preferably entirely, the gold porous substrate. In other terms, the gold porous substrate is preferably at least partly, and more preferably entirely, covered with the coating comprising a tin gold alloy. In other terms, the porous surface (i.e. the surface of the pores) of the gold porous substrate is preferably at least partly, and more preferably entirely, covered by the coating comprising a tin gold alloy.

In a preferred embodiment, the coating comprising a tin gold alloy is in direct physical contact with the gold porous substrate. In other words, the gold-based porous material of the invention does not comprise any intermediate coating(s) positioned between the gold porous substrate and the coating comprising a tin gold alloy.

The coating is preferably composed of a tin gold alloy.

The coating comprising a tin gold alloy can be a porous coating, and preferably comprises a porous tin gold alloy.

Within the gold-based porous material, the porous coating enables reversible interaction with lithium, and the gold porous material provides electronic conductivity.

The tin gold alloy preferably responds to the chemical formula SnAu. In other words, said tin gold alloy is an equiatomic intermetallic compound. It has preferably an hexagonal crystal structure.

The coating preferably does not comprise $SnO_2$. In other terms, there is no peak corresponding to $SnO_2$ according to XRD analysis.

The gold-based porous material has a porous structure which arises from the porous structure of the gold porous substrate. In particular, the gold porous substrate is obtained by a dynamic hydrogen bubble template (DHBT) method.

The gold-based porous material has preferably a cellular structure or a honeycomb-like structure.

Said cellular or honeycomb-like structure is advantageously a hierarchical structure, that-is-to-say a structure exhibiting a multiple porosity. More particularly, the gold-based porous material of the invention comprises a hierarchical porous network composed of interconnected pores having several sizes, such as macropores, mesopores, and eventually micropores.

The gold-based porous material of the invention can have at least macropores with a diameter ranging from about 0.1 μm to 50 μm, and preferably from about 20 to 40 μm.

The term « diameter » means the mean diameter in number of the whole pores of a given population, this diameter being generally determined by methods well known to a person skilled in the art. The diameter of one pore or pores according to the present invention can be determined by microscopy, notably by scanning electron microscopy (SEM) or by transmission electron microscopy (TEM), and preferably by scanning electron microscopy (SEM).

In one preferred embodiment, the gold-based porous material has an apparent porosity $p$ of at least 80% approximately, and more preferably ranging from 85 to 90% approximately.

In the present invention, the apparent porosity $p$ (in %) describes the fraction of void space in said gold-based porous material. It can be calculated using the following equation:

$$p(\%) = \frac{V_p}{V} = \frac{(S \times t) - \left(\frac{w}{\rho_{Au}}\right)}{(S \times t)}$$

in which $V_p$ is the pore volume of the gold porous substrate, V is the apparent volume of the gold porous substrate, S is the geometric surface of the gold porous substrate, t is the thickness of the gold porous substrate, w is the weight of the gold used to form the gold porous substrate, and $\rho_{Au}$ is the density of gold set at 8.9 g cm$^{-3}$. By considering that the gold porous substrate is a 3D-substrate and is represented by three dimensions: L (length), wd (width), and t (thickness), its thickness t is the smallest dimension and the geometric surface is considered to be L x wd. It is noted that the porosity calculations do not take into account the coating of the gold-based porous material.

The gold-based porous material of the invention can have pores with an internal wall structure comprising multi-branched dendrites and nodules.

More preferably, the gold-based porous material is in the form of a macroporous film with nanostructured pore walls.

In one preferred embodiment, the gold-based porous material is in the form of a film.

The film can have a thickness ranging from about 10 to 100 $\mu$m.

The gold-based porous material of the invention is a conductive film, and more particularly an electrically conductive film.

The gold-based porous material of the present invention can be characterized by an aspect ratio (AR), which is also called "roughness factor".

The aspect ratio (AR) corresponds to the ratio of the electrochemical active surface area (EASA) of the gold-based porous material (in cm$^2$) to the geometric surface area of the gold-based porous material (in cm$^2$).

The electrochemical active surface area (EASA) of the gold-based porous material can be calculated as described in Trasatti, S. et al., Pure Appl. Chem., 1991, 63, 711-734, more particularly from the coulombic charge involved in the reduction of gold process (in $\mu$C.cm$^{-2}$).

The aspect ratio (AR) can then be determined as follows:

$$AR = \frac{Electrochemical\ Active\ Surface\ Area\ (EASA)}{Geometrical\ Area}$$

Accordingly, the aspect ratio (AR) of the gold-based porous material can range from 500 to 1200 cm$^2$/cm$^2$ approximately, and preferably from 700 to 1100 cm$^2$/cm$^2$ approximately.

The supported gold-based porous material

The gold-based porous material as defined in the first object of the present invention can be a supported gold-based porous material.

The supported gold-based porous material may comprise the gold-based porous material as defined in the first object of the present invention and a support, said support being coated with said gold-based porous material.

The gold porous substrate is preferably in direct physical contact with the support.

The support can comprise:

- at least one substrate made from a material selected from the group consisting of silicon, oxidized silicon, and flexible polymer-based materials such as poly(ethylene terephthalate)(PET), cellulose paper composite, polydimethylsiloxane (PDMS), poly (4-vinyl phenol), aromatic polyimide, poly(arylether), poly(etherketone), heteroaromatic polymer-based material, or fluoropolymer, and

- at least one conductive layer such as a gold layer, said conductive layer being deposited on said substrate.

The support can further comprise intermediate layer(s) between the substrate and the conductive layer. Said intermediate layer(s) can enhance bonding properties between the conductive layer and the substrate.

Preferably, the support comprises sequentially an oxidized silicon substrate, a layer of titanium, and a layer of gold (i.e. Si/SiO$_2$/Ti/Au support).

The coating of the gold-based porous material is preferably not in direct physical contact with the support.

The support can have a thickness ranging from about 100 $\mu$m to 1000 $\mu$m, and preferably from about 250 $\mu$m to 850 $\mu$m.

Use of the (supported) gold-based porous material

A second object of the present invention is the use of a gold-based porous material, preferably of a supported gold-based porous material, as defined in the first object of the present invention as a precursor of a negative electrode material.

Indeed, the gold-based porous material can insert lithium to provide an anode active material, which leads to excellent electrochemical performances, in terms of initial specific capacity, and cycling stability.

The gold-based porous material can thus evolve upon reaction with lithium into a further gold-based porous material comprising lithium which is disclosed hereinafter and which has unexpected electrochemical performances.

Process for the preparation of the (supported) gold-based porous material

A third object of the present invention is a process for the preparation of a gold-based porous material as defined in the first object of the present invention, wherein said process comprises at least the following steps:

i) providing a gold porous substrate by a dynamic hydrogen bubble template (DHBT) method, and

ii) electrodepositing tin from a solution comprising at least one tin precursor.

The process of the invention is simple, fast, clean, and leads easily to a highly porous gold-based material. This process can also be easily transferable to pilot production line with microelectronic facilities.

The first step i)

Thanks to the dynamic hydrogen bubble template method, it is possible to obtain a highly porous gold substrate which is already defined in the first object of the present invention.

More preferably, the gold porous substrate is in the form of a macroporous film with nanostructured pore walls

The DHBT method is a known electrodeposition at high overpotentials, where metal deposition is accompanied by the evolution of hydrogen ($H_2$) bubbles.

In one preferred embodiment, step i) is performed with constant current (i.e. galvanostatic deposition). Constant current is preferred by comparison with constant potential for facilitating upscaling.

Step i) can involve the use of a solution comprising at least one gold precursor, which can be selected from the group consisting of $HAuCl_4.3H_2O$, $AuCl_3$, $K(AuCl_4)$, $AuBr_3$, and mixture thereof.

The gold precursor preferably comprises gold ions at the oxidation state +III (i.e. $Au^{3+}$).

The concentration of the gold ions or $Au^{3+}$ in said solution preferably ranges from $1 \times 10^{-3}$ mol/l to $10 \times 10^{-3}$ mol/l approximately.

The solution can further comprise an acid compound, which can be selected from the group consisting of sulfuric acid, hydrochloric acid, nitric acid, and mixtures thereof.

Alternatively, the solution can comprise a salt such as $NH_4Cl$, which is able to generate $H_2$ as follows: $2NH_4^+ + 2e^- \rightarrow H_2 + 2NH_3$.

The concentration of the acid compound or the salt in said solution preferably ranges from 1 mol/l to 5 mol/l approximately.

Step i) can be performed at room temperature (i.e. 18-25°C).

More particularly, step i) is performed by electrodepositing gold, preferably on a support, from a solution as defined above.

The deposition time during step i) preferably ranges from 1 min to 30 min approximately, and more preferably from 10 min to 20 min approximately.

The support can be as defined in the first object of the present invention.

When a support is used in step i), a supported gold porous substrate is obtained.

Advantageously, step i) is carried out by immersing the support in said solution, and applying a given potential vs a reference electrode, or a given current with respect to the geometrical surface area of the support.

Step i) can be performed under a constant current per surface ranging from about 1 A/cm$^2$ to 5 A/cm$^2$, where the surface is the geometrical surface area to which current is applied for deposition.

Electrodeposition is generally carried out with a 3-electrode configuration, namely a platinium counter electrode, a standard calomel electrode as the reference, and a support as defined in the invention such as Si/SiO$_2$/Ti/Au as the working electrode.

The second step ii)

During step ii), electrodeposition of tin is achieved without affecting the morphology of the gold porous substrate. Surprisingly, formation of a SnAu alloy occurs during the electrodeposition step ii).

In one preferred embodiment, step ii) is performed with constant potential. This is preferred for controlled reduction of $Sn^{2+}$ ions on Au surface.

Step ii) can be performed in an acidic medium, preferably at a pH of less than 2, and preferably ranging from 1) to 1.2.

The solution comprising at least one tin precursor is preferably an acidic solution.

The tin precursor preferably comprises tin ions at the oxidation state +II (i.e. $Sn^{2+}$).

The tin precursor can be selected from the group consisting of $SnCl_2$, $SnSO_4$, Tin (II) oxalate, Tin (II) citrate, Tin (II) ethylhexanoate, and mixture thereof.

The concentration of the tin ions or $Sn^{2+}$ in said solution preferably ranges from $1 \times 10^{-3}$ mol/l to $10 \times 10^{-3}$ mol/l approximately.

To provide an acidic solution, the solution can further comprise an acid compound, which can be selected from the group consisting of sulfuric acid, hydrochloric acid, nitric acid, and mixture thereof.

The concentration of the acid compound in said solution preferably ranges from 0.01 mol/l to 0.1 mol/l approximately.

The deposition time during step ii) preferably ranges from 1 min to 10 min approximately, and more preferably from 3 min to 6 min approximately.

Step ii) can be performed at room temperature (i.e. 18-25°C).

Step ii) can be carried out by immersing the gold porous substrate in said solution, and applying a given potential vs a reference electrode, or a given current with respect to the surface of the gold porous substrate.

Step ii) is advantageously performed under a constant potential ranging from about -1.5 to -2.5 vs SCE (saturated calomel electrode as the reference electrode).

Electrodeposition is generally carried out with a 3-electrode configuration, namely a platinum counter electrode, a standard calomel electrode as the reference, and a working electrode made of the gold-porous substrate obtained in step i) or the supported gold-porous substrate obtained in step i) such as a Si/SiO$_2$/Ti/Au/Au DHBT electrode.

When a support is used in step i), a supported gold-based porous material as defined in the first object of the present invention is obtained in step ii).

During step ii), deposition of tin on gold porous substrate is homogeneous.

Other steps

The process can further comprise between steps i) and ii), a washing step i'), so as to wash the obtained gold porous substrate.

Step i') can be performed by using water or dionized water, preferably several times.

The process can further comprise after step i'), a drying step i"), so as to dry the obtained gold porous substrate.

Step i") can be performed by vacuum drying.

The process can further comprise after step ii), a drying step ii'), so as to dry the obtained gold-based porous material.

Step ii') can be performed by vacuum drying.

The support optionally used in step i) can be previously prepared by conventional microfabrication methods.

For example, a Ti/Au thin film can be deposited by evaporation on an oxidized silicon substrate so as to obtain a support comprising a silicon substrate sequentially coated with a layer of SiO$_2$ (oxidized silicon substrate), a layer of Ti, and a layer of Au.

The (supported) gold-based porous material comprising lithium

A fourth object of the present invention is a gold-based porous material comprising lithium, preferably in the form of a film, wherein said gold-based porous material comprising lithium includes a gold porous substrate and a coating comprising a lithium tin gold alloy.

The gold porous substrate is as defined in the present invention.

More particularly, the porous structure of the gold-based porous material as defined in the present invention is maintained after incorporating lithium.

The gold-based porous material comprising lithium provides rate capability with flat discharge profile even at high rates, and robust cycling stability. Furthermore, the gold-based porous material comprising lithium can be used as an electrode material in miniaturized devices, where size and compactness are critical, and cost is mainly determined by the microfabrication process and not by the minute amount of active material involved.

The coating comprising a lithium tin gold alloy preferably covers at least partly, and more preferably entirely, the gold porous substrate. In other terms, the gold porous substrate is preferably at least partly, and more preferably entirely, covered with the coating comprising a lithium tin gold alloy. In other terms, the porous surface (i.e. the surface of the pores) of the gold porous substrate is preferably at least partly, and more preferably entirely, covered by the coating comprising a lithium tin gold alloy.

The coating is preferably composed of a lithium tin gold alloy.

The coating comprising a lithium tin gold alloy can be a porous coating.

The gold-based porous material comprising lithium has preferably a cellular structure or a honeycomb-like structure.

Said cellular or honeycomb-like structure is advantageously a hierarchical structure, that-is-to-say a structure exhibiting a multiple porosity. More particularly, the gold-based porous material comprising lithium of the invention comprises a hierarchical porous network composed of interconnected pores having several sizes, such as macropores, mesopores, and micropores.

The gold-based porous material comprising lithium of the invention can have at least macropores with a diameter ranging from about 0.1 $\mu$m to 50 $\mu$m, and preferably from about 20 to 40 $\mu$m.

In one preferred embodiment, the gold-based porous material comprising lithium has an apparent porosity $p$ of at least 80% approximately, and more preferably ranging from 85 to 90% approximately.

The gold-based porous material comprising lithium of the invention can have pores with an internal wall structure comprising multi-branched dendrites and nodules.

More preferably, the gold-based porous material is in the form of a macroporous film with nanostructured pore walls.

The film can have a thickness ranging from about 10 to 100 $\mu$m.

The lithium tin gold alloy can respond to the following formula : $Li_{2+x}SnAu$, in which x is such that $0 \leq x < 2$.

In a preferred embodiment, the coating comprising a lithium tin gold alloy is in direct physical contact with the gold porous substrate.

The gold-based porous material comprising lithium is preferably obtained by submitting the gold-based porous material as defined in the first object of the present invention to at least one charge in a lithium battery.

Indeed, when submitting the gold-based porous material as defined in the first object of the present invention to at least one charge in a lithium battery, lithium is inserted into at least one part of the tin gold alloy, and preferably the whole tin gold alloy, so as to form a lithium tin gold alloy.

More particularly, the porous structure of the gold-based porous material as defined in the present invention is maintained after cycling.

Preferably, the lithium tin gold alloy responds to the following formula : $Li_2SnAu$ (i.e. x = 0). This lithium tin gold alloy is very stable and can be used as a negative electrode material.

In one preferred embodiment, the gold-based porous material comprising lithium is a supported gold-based porous material comprising lithium.

The supported gold-based porous material comprising lithium may include the gold-based porous material comprising lithium as defined in the fourth object of the present invention and a support, said support being coated with said gold-based porous material comprising lithium.

The support can be as defined in the first object of the present invention.

A fifth object of the present invention is the use of a gold-based porous material comprising lithium, preferably of a supported gold-based porous material comprising lithium, as defined in the fourth object of the present invention, as a negative electrode material.

The gold-based porous material comprising lithium displays a good cycling stability, whatever the mass loadings of said gold-based porous material comprising lithium.

For example, long-term cycling involves the lithiation of $Li_2SnAu$ into further $Li_xSnAu$ lithiated phases, with an $x$ value varying between 2 to ~4.

Surprisingly, unlike $Li_xSn$, the variation in volume during lithiation-delithiation process of $Li_2AuSn$ is very low: first lithiation of $Li_2AuSn$ to $Li_3AuSn$ has minor volume change of ~26% with following steps having lower associated volume expansion while transitioning from individual lithiated phases (total calculated volume expansion of 44.4%). Moreover, the void space of the porous structure can accommodate this limited volume expansion of the anode active material, making porous $Li_2SnAu$ a very promising anode for long-term cycling microbatteries.

A sixth object of the present invention is a lithium-ion battery comprising:

- a positive electrode material,

- a negative electrode material or a negative electrode material precursor,

said negative electrode material or negative electrode material precursor, and said positive electrode material being separated from one another by an electrolyte, wherein the negative electrode material precursor is a gold-based porous material as defined in the first object of the present invention and the negative electroce material is a gold-based porous material comprising lithium as defined in the fourth object of the present invention .

The positive electrode material can comprise a positive electrode active material, for example selected from the group consisting of lithiated metal oxides ($LiCoO_2$, $LiNiO_2$, $LiMn_2O_4$ etc); lithium phosphates ($LiFePO_4$, $Li_3V_2(PO_4)_3$, $LiCoPO_4$, $LiMnPO_4$, $LiNiPO_4$; and active materials of $LiMO_2$ lamellar oxide type with M representing a mixture of at least two metals chosen from Al, Ni, Mn and Co, such as $LiNi_{1/3}Mn_{1/3}CO_{1/3}O_2$ (NMC family), $LiNi_{0.8}Co_{0.15}Al_{0.05}O_2$ (NCA family) or $LiNi_{0.5}Mn_{0.5}O_2$.

The positive electrode material can further comprise at least one polymeric binder, and optionally a material conferring electronic conduction.

The electrolyte can be a solid electrolyte, a polymer gelled electrolyte, or a liquid electrolyte.

The electrolyte is preferably a non-aqueous electrolyte.

The electrolyte preferably comprises at least one lithium salt.

The lithium salt can be selected from $LiPF_6$, $LiClO_4$, $LiBF_4$, $LiNO_3$, $LiN(SO_2CF_3)$, $LiAsF_6$, $LiCF_3SO_3$, $Li(CF_3SO_2)_3C$, $LiB(C_2O_4)_2$, $LiBF_2(C_2O_4)$, $LiN(C_4F_9SO_2)(CF_3SO_2)$, and mixtures thereof.

When the electrolyte is a liquid electrolyte, it can further comprise an aprotic solvent.

The aprotic solvent can be selected from ethylene carbonate, propylene carbonate, butylene carbonate, dimethyl carbonate, diethyl carbonate, methyl propyl carbonate, dipropyl carbonate, ethyl methyl carbonate, vinylene carbonate, 1,3-dimethoxyethane, 1,3-diethoxyethane, 1,3-dioxolane, tetrahydrofurane, and mixtures thereof.

When the electrolyte is a liquid electrolyte, the battery can further comprise a separator impregnating said liquid electrolyte.

The separator acts as electrical insulator and allows the transport of ions.

It is noted that in the battery of the present invention, the negative electrode material or the negative electrode material precursor does not require to comprise a polymeric binder and/or a material conferring electronic conduction such as a carbon-based compound.

A seventh object of the present invention is a process for the preparation of a gold-based porous material comprising lithium, preferably of a supported gold-based porous material comprising lithium, as defined in the fourth object of the present invention, wherein said process comprises at least a step of submitting to a charge a cell comprising:

- lithium metal or lithium alloy metal as a counter electrode or a positive electrode material as defined in the invention, and

- a gold-based porous material, preferably a supported gold-based porous material, as defined in the first object of the present invention,

said counter electrode or positive electrode material, and said gold-based porous material being separated from one another by an electrolyte.

The electrolyte is as defined in the sixth object of the present invention.

The present invention is illustrated in more detail in the examples below, but it is not limited to said examples.

**Example 1 : preparation of a gold-based porous material**

A support was first prepared so as to receive the gold porous substrate.

Accordingly, a Ti(100 nm)/Au(300 nm) thin film is deposited by evaporation on an oxidized silicon substrate which is electrochemically pretreated by cycling the potential at a scan rate of 100 mV s$^{-1}$ between -0.3 and +1.7 V versus saturated calomel electrode (SCE) in 1 M $H_2SO_4$ until a stable voltammogram is obtained. Thus, the obtained support comprises a silicon substrate sequentially coated with a thin layer of $SiO_2$, a thin layer of Ti, and a thin layer of Au.

A solution was prepared by mixing dionized water, $HAuCl_4.3H_2O$, and sulfuric acid, such that the concentration of gold ions [$Au^{3+}$] in said solution is $2 \times 10^{-3}$ mol/l, and the concentration of sulfuric acid is 3 mol/l.

Electrodeposition of gold on said support is performed by immersing the support in said solution, and applying at room temperature a constant current of 5 A/cm$^2$, in a 3-electrode configuration, namely a Pt counter electrode, a standard calomel electrode as the reference, and the support previously prepared as the working electrode.

The deposition time during step i) is about 20 min.

A supported porous gold substrate in the form of a film is obtained, washed several times in de-ionized water, and vacuum drying for 30 min.

Then, a solution was prepared by mixing dionized water, $SnCl_2$, and hydrochloric acid, such that the concentration of tin ions [$Sn^{2+}$] in said solution is $7.5 \times 10^{-3}$ mol/l, and the concentration of hydrochloric acid is 0.02 mol/l.

Electrodeposition of tin on the gold porous substrate is performed by immersing the supported porous gold substrate in said solution, and applying at room temperature a constant potential of -2 V *vs* SCE, in a 3-electrode configuration, namely a Pt counter electrode, a standard calomel electrode as the reference, and the supported porous gold substrate previously prepared as the working electrode.

The deposition time during step i) is about 10 min.

SnAu alloy is thus formed with mass loadings of ~2.9 mg cm$^{-2}$ of SnAu per min.

The gold-based porous material obtained is further dried to remove any moisture content.

The supported gold-based porous material is in the form of a film having a thickness of 55-75 $\mu$m.

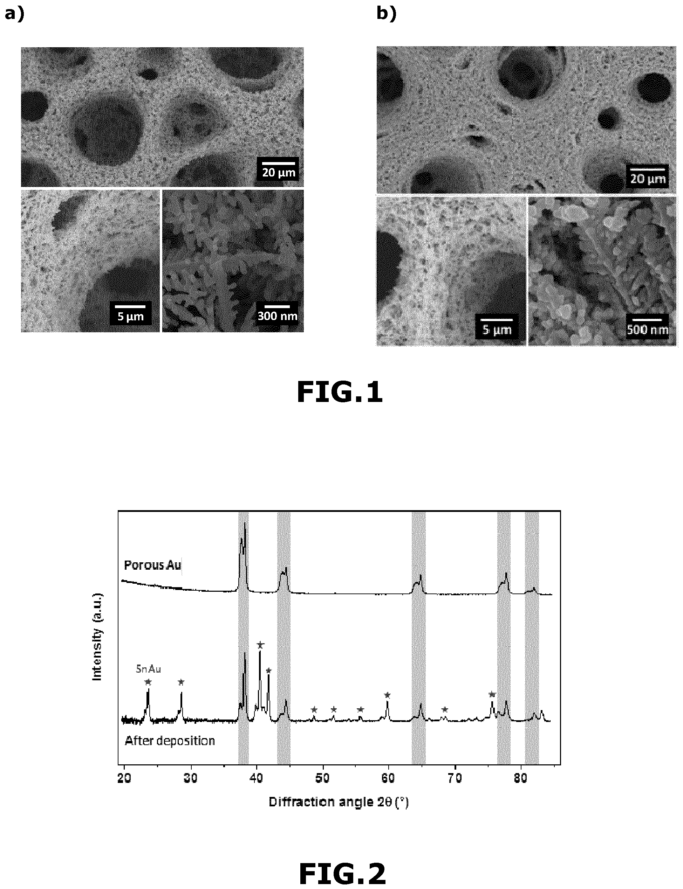

Figure 1 represents SEM images at different magnifications of the gold porous substrate (figure 1a) and of the gold-based porous material (figure 1b) obtained in example 1.

SEM images were obtained on a Hitachi S-4800 field emission electron microscope.

Figure 2 represents Grazing XRD pattern of the gold porous substrate before and after Sn electrodeposition with several peaks matching SnAu alloy.

The crystallographic structures were analyzed by grazing incidence X-ray diffraction (XRD) measurements on a Bruker D8 Advanced X-ray diffractometer with Cu Ka radiation (1.54184 A°), operating at 40 kV and 40 mA.

**Example 2: preparation of a gold-based porous material comprising lithium**

The gold-based porous material obtained in example 1 (0.8 cm$^2$) was tested using a Li-ion half-cell (EL-Cell) assembled in a glove box with purified argon, with lithium foil as counter and reference electrode, and glass fiber separator soaked with 1 M LiPF$_6$ in ethylene carbonate (EC) / diethyl carbonate (DEC) (1:1 volume ratio).

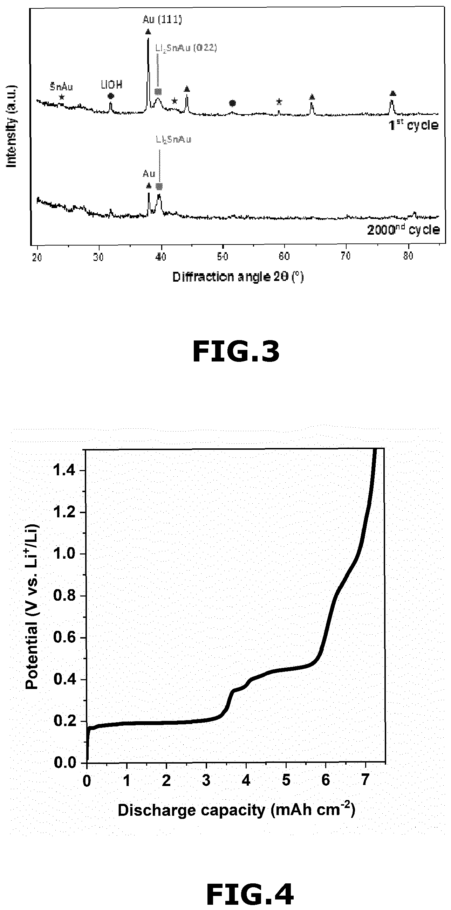

Figure 3 represents *in situ* XRD pattern recorded after 1 cycle and 2000 cycles of charge/discharge [cell cycled between cycling potential - 0.02 and 1.50 V vs Li/Li$^+$, 2 formation cycles at 0.1C rate, followed by 2000 cycles at 3C rate, where 1C = 1mA/cm$^2$]. The configuration used is two electrode systems with Li metal foil as counter as well as reference electrode. After a certain number of cycles, only a stable Li$_2$SnAu phase remains for lithiation.

Figure 3 shows that the electrode after one cycle of lithiation-delithiation is constituted of SnAu, its lithiated counterpart *i.e.* Li$_2$SnAu, and unalloyed Au underneath. After a large number of 2 000 cycles, the peaks corresponding to Li$_2$SnAu and unalloyed Au are quite conspicuous, whereas SnAu peak has completely disappeared. This indicates that even during long cycling, the porous conducting 3D scaffold of gold porous substrate stays intact, providing the much-needed electronic conductivity. Also, as the SnAu signal almost completely disappears, it indicates that the following reaction : Li$_2$SnAu + $x$ Li $\leftrightarrow$ Li$_{2+x}$SnAu is providing the reversible capacity.

Presence of Li$_2$SnAu after long cycling indicates efficient Li$^+$ transport properties in the electrode. The electrochemical lithiation of conformally deposited SnAu alloy not only gives high reversible specific areal capacity, but also results in intermediates, which favor Li$^+$ ion diffusion kinetics, displaying its superiority as a prospective anode material for Li-ion microbatteries.

**Example 3: electrochemical characterizations of the gold-based porous material comprising lithium**

The gold-based porous material obtained in example 1 (0.8 cm$^2$) was tested using a Li-ion half-cell (EL-Cell) assembled in a glove box with purified argon, with lithium foil as counter and reference electrode, and glass fiber separator soaked with 1 M LiPF$_6$ in ethylene carbonate (EC) / diethyl carbonate (DEC) (1:1 volume ratio).

Figure 4 represents the potential (in V vs Li$^+$/Li) as a function of the discharge capacity (in mAh/cm$^2$) after 10 minutes of Sn deposition. The electrode exhibits high specific capacity at low C-rate (0.1 C), of 7.3 mAh/cm$^2$, which is much higher than most reported microbattery anodes.

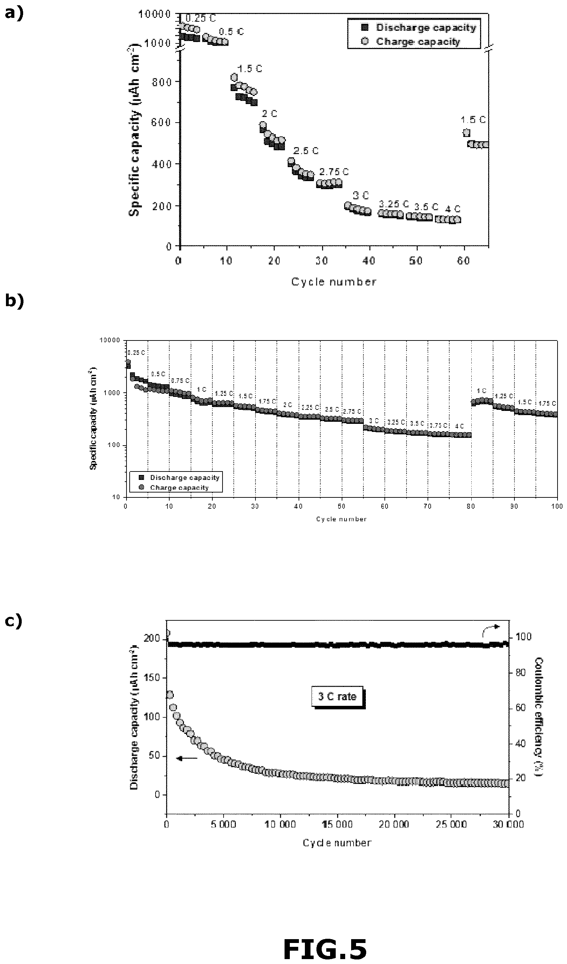

Figures 5a and 5b represent the specific capacity (in $\mu$Ah/cm$^2$) as a function of the number of cycles for different C rates. In case of figure 5b, the C-rate performance is performed with small current steps (0.25C).

Figure 5c represents the discharge capacity (in $\mu$Ah/cm$^2$) and the coulombic efficiency (in %) as a function of the number of cycles at 3C rate.

Figure 5a and 5b show the robustness of the electrode towards rate fluctuations. The electrode displays extraordinary stability towards rate change with 156 $\mu$Ah/cm$^2$ at 4C rate (figure 5a) and reversible capacity retention upon reversal to lower rates (816 $\mu$Ah/cm$^2$ at 1C, figure 5b).

Extra long-term cyclability of the electrode is evaluated at 3C rate (Figure 5c). The electrode exhibits excellent stability testifying the reversible transition from Li$_2$SnAu to Li$_{4.2}$SnAu. More impressively, the electrode shows superior cyclability, sustaining 30 000 cycles with a limited capacity decay below 10 nAh/cm$^2$ per cycle.

**Claims**

1. A gold-based porous material, wherein said gold-based porous material comprises a gold porous substrate and a coating comprising a tin gold alloy.

2. The gold-based porous material according to claim 1, wherein it has a cellular structure or a honeycomb-like structure.

3. The gold-based porous material according to claim 1 or claim 2, wherein it is in the form of a film, preferably having a thickness ranging from 10 to 100 $\mu$m.

4. The gold-based porous material according to any one of the preceding claims, wherein it is in the form of a macroporous film with nanostructured pore walls.

5. The gold-based porous material according to any one of the preceding claims, wherein the coating is composed of a tin gold alloy responding to the chemical formula SnAu.

6. The gold-based porous material, wherein it is a supported gold-based porous material comprising said gold-based porous material and a support, said support being coated with said gold-based porous material.

7. Use of a gold-based porous material as defined in any one of the preceding claims, as a precursor of a negative electrode material.

8. A process for the preparation of a gold-based porous material as defined in any one of the preceding claims, wherein said process comprises at least the following steps:

   i) providing a gold porous substrate by a dynamic hydrogen bubble template method, and
   ii) electrodepositing tin from a solution comprising at least one tin precursor.

9. The process according to claim 8, wherein step i) is performed with constant current.

10. The process according to claim 8 or claim 9, wherein step i) is performed by electrodepositing gold, preferably on a support, from a solution comprising at least one gold precursor and an acid compound.

11. The process according to any one of claims 8 to 10, wherein step ii) is performed by electrodepositing tin from an acidic solution comprising at least one tin precursor, with constant potential.

12. A gold-based porous material comprising lithium, wherein said gold-based porous material comprising lithium includes a gold porous substrate and a coating comprising a lithium tin gold alloy.

13. The gold-based porous material comprising lithium according to claim 12, wherein the coating is composed of a lithium tin gold alloy responding to formula $Li_2SnAu$.

14. The gold-based porous material comprising lithium according to claim 12 or claim 13, wherein it is a supported gold-based porous material comprising lithium including said gold-based porous material comprising lithium and a support, said support being coated with said gold-based porous material comprising lithium.

15. Use of a gold-based porous material comprising lithium as defined in any one of claims 12 to 14, as a negative electrode material.

16. A lithium-ion battery comprising:

   - a positive electrode material,
   - a negative electrode material or a negative electroce material precursor,

   said negative electrode material or negative electrode material precursor, and said positive electrode material being separated from one another by an electrolyte,
   wherein the negative electrode material precursor is a gold-based porous material as defined in any one of claims 1 to 6, and the negative electrode material is a gold-based porous material comprising lithium as defined in any one of claims 12 to 14.

17. A process for the preparation of a gold-based porous material comprising lithium as defined in any one of claims 12 to 14, wherein said process comprises at least one step of submitting to a charge a cell comprising:

   - lithium metal or lithium alloy metal as a counter electrode, or a positive electrode material, and
   - a gold-based porous material as defined in any one of claims 1 to 6,

   said counter electrode or positive electrode material, and said gold-based porous material being separated from one another by an electrolyte.

a)

b)

# FIG.1

# FIG.2

**FIG.3**

**FIG.4**

a)

b)

c)

FIG.5

**EP 3 872 897 A1**

Europäisches
Patentamt

European
Patent Office

Office européen
des brevets

# EUROPEAN SEARCH REPORT

Application Number

EP 20 30 5185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN YU ET AL: "Li Storage in 3D Nanoporous Au-Supported Nanocrystalline Tin", ADVANCED MATERIALS, vol. 23, no. 21, 3 June 2011 (2011-06-03), pages 2443-2447, XP055719134, ISSN: 0935-9648, DOI: 10.1002/adma.201004331 | 1-3, 6-11,16 | INV. H01M4/13 B82Y30/00 H01G11/46 H01G11/86 H01M4/36 H01M4/38 H01M4/48 |
| A | * page 2443 - page 2445 * ----- | 4,5 | |
| X | PEI YUANJIAO ET AL: "Ultra-rapid fabrication of highly surface-roughened nanoporous gold film from AuSn alloy with improved performance for nonenzymatic glucose sensing", BIOSENSORS AND BIOELECTRONICS, ELSEVIER SCIENCE LTD. UK, AMSTERDAM, NL, vol. 117, 11 July 2018 (2018-07-11), pages 758-765, XP085435768, ISSN: 0956-5663, DOI: 10.1016/J.BIOS.2018.07.021 * figure 2 * ----- | 1-3 | |
| | | | TECHNICAL FIELDS SEARCHED (IPC) |
| X,D | US 2013/295461 A1 (CHEN MINGWEI [JP] ET AL) 7 November 2013 (2013-11-07) * paragraph [0148] * ----- | 1-3 | H01M H01G B82Y |
| A | CN 107 447 235 A (UNIV GUANGDONG TECHNOLOGY) 8 December 2017 (2017-12-08) * the whole document * ----- | 1-11,16 | |

-/--

The present search report has been drawn up for all claims

| Place of search | Date of completion of the search | Examiner |
|---|---|---|
| Munich | 15 October 2020 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SREERAJ P ET AL: "Electrochemical investigations of Li"2AuSn"2", SOLID STATE IONICS, NORTH HOLLAND PUB. COMPANY. AMSTERDAM; NL, NL, vol. 181, no. 1-2, 8 February 2010 (2010-02-08), pages 59-63, XP026883360, ISSN: 0167-2738, DOI: 10.1016/J.SSI.2009.11.013 [retrieved on 2010-01-30] * the whole document * | 12-17 | |
| A | US 6 528 208 B1 (THACKERAY MICHAEL M [US] ET AL) 4 March 2003 (2003-03-04) * the whole document * | 12-17 | |
| A | JP 2008 077886 A (TOSHIBA CORP) 3 April 2008 (2008-04-03) * the whole document * | 12-17 | |

TECHNICAL FIELDS
SEARCHED    (IPC)

The present search report has been drawn up for all claims

| Place of search | Date of completion of the search | Examiner |
|---|---|---|
| Munich | 15 October 2020 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

```
see sheet B
```

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-11(completely); 16(partially)

   Au-porous substrate with Au-Sn alloy coating
                        ---

2. claims: 12-15, 17(completely); 16(partially)

   Au-porous substrate with Li2SnAu intermetallic / Zintl phase
   coating
                        ---

## ANNEX TO THE EUROPEAN SEARCH REPORT
## ON EUROPEAN PATENT APPLICATION NO.

EP 20 30 5185

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2020

| Patent document cited in search report | | Publication date | Patent family member(s) | | Publication date |
|---|---|---|---|---|---|
| US 2013295461 | A1 | 07-11-2013 | CN 103270565 A | | 28-08-2013 |
| | | | JP 6019533 B2 | | 02-11-2016 |
| | | | JP WO2012086697 A1 | | 22-05-2014 |
| | | | KR 20140037022 A | | 26-03-2014 |
| | | | TW 201237215 A | | 16-09-2012 |
| | | | US 2013295461 A1 | | 07-11-2013 |
| | | | WO 2012086697 A1 | | 28-06-2012 |
| CN 107447235 | A | 08-12-2017 | NONE | | |
| US 6528208 | B1 | 04-03-2003 | NONE | | |
| JP 2008077886 | A | 03-04-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013295461 A1

**Non-patent literature cited in the description**

- **TRASATTI, S. et al.** *Pure Appl. Chem.,* 1991, vol. 63, 711-734